# EUROPEAN PATENT SPECIFICATION

(11) **EP 1 398 251 B1**
(45) Date of publication and mention of the grant of the patent: **06.09.2006**
(21) Application number: 03445100.5
(22) Date of filing: 09.09.2003
(51) Int. Cl.: B62D 51/04

(54) **Tiller truck and control method for such a truck**
Deichselgesteuertes Flurförderfahrzeug und Steuerverfahren für ein derartiges Fahrzeug
Chariot électrique à conduite par timon et un procédé de commande d'un tel chariot

(30) Priority: 12.09.2002 SE 0202699
(43) Date of publication of application: 17.03.2004
(73) Proprietor: BT INDUSTRIES AB, 59581 Mjölby (SE)
(72) Inventor: Stenberg, Kurt-Ove, 595 44 Mjölby (SE)
(74) Representative: Berglund, Erik Wilhelm

(56) References cited:
- DE-A- 4 408 775
- DE-C- 19 612 603

## Description

This invention concerns tiller trucks driven by electrical motors and a method for controlling such trucks. At these, when the tiller is in one of its end positions up or down the truck is normally automatically braked, that is when the tiller is in one of these positions the brake of the truck is activated and the drive control inactive. Since however these trucks frequently are used in narrow spaces as for instance platforms of lorries it is desirable to be able to manoeuvre the truck also with the tiller maximally swung up, that is when the truck is as shortest and thereby maximally manoeuvrable in narrow spaces.

A first solution to this problem is given in DE 4408775A1. Here a high swing range in a vertical direction is arranged, within which range the truck is still manoeuvrable with a reduced speed. Although this solution provides with retained security (due to the low speed) a possibility to drive the truck with the tiller swung up to a range close to the upper end position and offer thereby a shorter total length. Still however the top range of the tiller and a short adjoining distance is a braked position without manoeuvering possibilities. The driver must learn which angular range of the tiller that provide normal driving and which range that offer driving with a reduced speed. Furthermore at this arrangement the angle range of the tiller where the working speed is normal is reduced. A further essential drawback with this way of solving the problem is that it requires additional position sensors for the tiller. In addition to this being cost increasing for the truck it also result in this having to be provided in different versions depending on if one wish to have the possibility of driving with the tiller lifted up or not.

A further solution is given in DE-196112603, which discloses a method for controlling an electric driven tiller provided fork truck according to the preamble of claim 1, and an electric driven tiller provided fork truck according to the preamble of claim 6. Here instead a special button on the tiller head is used to disconnect the brake and allow driving with a reduced speed. Here the installing of the additional button is necessary for the buyers who desire this version, that is the truck must available in two versions. In the actual marketed version it is furthermore required that the button is depressed at the same time as the truck is driven with the reduced speed, which in reality will mean a two-hand operation. To drive with two hands is particularly unwanted when one from the side have to reach in over the truck, which reasonably becomes uncomfortable and perhaps even increases the risks.

Even if the two above described solutions try to eliminate the basic problem, namely the security and the wish to manoeuver the truck with the tiller in its fully up turned position, they cause other and essential drawbacks. The object of the invention, which is achieved by means of a method for contolling an electric driven tiller provided fork truck according to claim 1 and by means of an electric driven tiller provided fork truck according to claim 6 is therefore to achieve a solution that lacks these drawbacks.

In accordance with the invention this object is solved by the control unit of the motor being so programmed that a quick double pressing of the speed control result in a resetting of the electronic control unit of the drive motor so that this is changed from normal driving to one for driving in a very low speed range, that is with a very low maximum speed, for instance 1,6km/h. At the same time the braking in the end positions is inhibited. In this way driving is made possible with the tiller fully turned up and the steering can either be done with one or two hands just as usually as long as the truck so to say remain in this low speed mode. Should the truck be stopped and left in this low speed mode the control electronics after short while, for instance 7 sec disconnect the low speed mode and return to normal speed/working mode with braking in the end positions of the tiller. If instead one wish deliberately to leave the low speed mode to enter into normal work speed one can consider that a new double pressing is used. Alternatively one can consider that some other switch that anyhow is connected to the control unit of the truck is used for a return from low speed mode to normal work mode. For instance one can consider that a depressing of the belly button or a depressing of the signal button, for which latter one there is no need in the low speed mode since the speed is low. One can of course consider leaving the low speed mode not only through one of the above described ways but that for the same truck it is possible to leave the low speed mode in two of these ways, alternatively all three.

The above described way to make the truck usable in its shortest and thereby most moveable work position that is with the arm totally swung up is entirely achieved through programming of the control electronics of the truck and the motor of this respectively. In other words no particular measures need to be taken at the fabrication of a truck that is to have the invention incorporated and it is sufficient to provide this with corresponding software. One does thus not have to fabricate specifically different trucks for those who desire this additional option and it also becomes possible to alter trucks that are delivered in one version the other. In this way the cost of the solution according to the invention becomes low not to say nonexistent. The invention can even be implemented in already made and delivered trucks by a change of the software in these.

By the invented method using the double clicking on the speed control in order to enter low speed mode and respectively leave this with a double click or some other button the security is also increased since only a trained or informed person can enter into the low speed mode. This differing from the previously known solutions where this more easily can take place by mistake.

For the transition to the low speed mode one can either elect that transition can take place with a double clicking independent of position or that transition only can take place in the upper brake locking position. Since there already for the braking and the disconnection of the driving exist corresponding sensors this does not require any additional sensors.

When the truck through a double clicking has been transferred to low speed mode it does not matter how the tiller is swung up or down the speed remain all the time the low one and the driver does not have to be confused by the speed varying dependent on the height of the tiller.

The invention is thus simpler to implement and more comfortable and less confusing to use than the known solutions.

## Claims

1. Method for controlling an electric driven tiller provided fork truck, of the kind where the truck has the brake activated or applied when the tiller is in its end positions or close to these, to release the brake and allow manoeuvering, **characterized in that** control electronics means belonging to the truck respectively the truck motor are programmed so that a double click on the speed control changes the drive from the normal work mode, that is with the entire speed range and braked end positions of the tiller, to a low speed mode with a freed brake and an available drive with very low maximum speed in the entire movement range of the tiller so that the truck can be moved by the drive motor also with the arm fully turned up:

2. Method according to claim, **characterized in that** the truck is programmed to be brought out of the low speed mode with a renewed double pressing of the speed control.

3. Method according to claim 1 or 2, **characterized in that** one leaves the low speed mode by depressing a so called belly button on the tiller handle.

4. Method according to any of the preceding claims, **characterized in that** one leaves the low speed mode by pushing the signal button that in the low speed mode is altered to have this function and not to give any signal.

5. Method according to any of the preceding claims, **characterized in that** if the truck when driven in low speed mode is inactive during a predetermined relatively short time it returns automatically to the normal work mode.

6. Electric driven tiller provided fork truck of the kind where the truck has its brake activated or applied when the tiller is in its end positions or close to these, **characterized in that** control electronics means belonging to the truck respectively the truck motor are programmed to change, at a double pressing of the speed control, the drive from the normal work mode, that is with the entire speed range and braked end positions of the tiller, to a low speed mode with released brake and an available drive with a very low maximum speed in the entire movement range of the tiller so that the truck can be moved by the drive motor also with the tiller fully turned up.

7. Electric driven tiller provided fork truck according to claim 6, **characterized in that** the truck is programmed to be brought out of the low speed mode at a repeated double pressing of the speed control.

8. Electric drive tiller provided fork truck according to claim 6 or 7, **characterized in that** it is programmed to leave the low speed mode at a depressing of a so called belly button on the tiller handle.

9. Electric drive tiller provided fork truck according to any of the claims 6 - 8, **characterized in that** it is so programmed that one leaves the low speed mode by depressing the signal button, that in the low speed mode is altered to have this function and not give any signal.

10. Electric driven tiller provided fork truck according to any of the claims 6- 9, **characterized in that** the truck is so programmed that if the truck at use in low speed mode is inactive for a predetermined, relatively short time it returns automatically to the normal work mode.

## Patentansprüche

1. Verfahren zum Steuern eines elektrisch betriebenen, deichselgesteuerten Gabelstaplers der Bauart, bei der der Stapler die Bremse aktiviert oder angezogen hat, wenn die Deichsel sich in den Endpositionen oder in der Nähe derselben befindet, um die Bremse zu lösen und ein Manövrieren zu gestatten, **dadurch gekennzeichnet, dass** elektronische Steuereinrichtungen, die zu dem Stapler bzw. zu dem Staplermotor gehören, derart programmiert sind, dass bei einem Doppelklicken bei der Geschwindigkeitssteuerung der Antrieb von der Grundbetriebsart, bei der der gesamte Geschwindigkeitsbereich und die gebremsten Endpositionen der Deichsel zur Verfügung stehen, auf einen Niedriggeschwindigkeitsbetriebe mit einer gelösten Bremse und einem verfügbaren Antrieb mit sehr niedriger maximaler Geschwindigkeit innerhalb des gesamten Bewegungsbereiches der Deichsel derart umgeschaltet wird, dass der Stapler durch den Antriebsmotor auch dann bewegt werden kann, wenn der Arm vollständig nach oben geschwenkt ist.

2. Verfahren nach Anspruch 1, **dadurch gekennzeichnet, dass** der Stapler derart programmiert ist, dass bei einem erneuten doppelten Niederdrücken der Geschwindigkeitssteuerung die Betriebsart mit niedriger Geschwindigkeit verlassen wird.

3. Verfahren nach Anspruch 1 oder 2, **dadurch gekennzeichnet, dass** die Betriebsart mit niedriger Geschwindigkeit **dadurch** verlassen werden kann, dass ein so genannter Körperschutzschalter am Deichselgriff nieder gedrückt wird.

4. Verfahren nach einem der vorangehenden Ansprüche, **dadurch gekennzeichnet, dass** die Betriebsart mit niedriger Geschwindigkeit **dadurch** verlassen wird, dass ein Signalschalter nieder gedrückt wird, welcher bei der Betriebsart mit niedriger Geschwindigkeit diese Funktion hat und kein Signal abgibt.

5. Verfahren nach einem der vorangehenden Ansprüche, **dadurch gekennzeichnet, dass**, wenn der Stapler mit der Betriebsart mit niedriger Geschwindigkeit betrieben wird und diese während eines vorbestimmten relativ kurzen Zeitraums inaktiv ist, automatisch eine Rückführung auf die Grundbetriebsweise erfolgt.

6. Elektrisch betriebene Deichsel für einen Gabelstapler der Bauart, bei der der Stapler eine Bremse aktiviert oder angezogen hat, wenn die Deichsel sich in den Endpositionen oder nahe derselben befindet, **dadurch gekennzeichnet, dass** elektronische Steuereinrichtungen, die zu dem Stapler bzw. zu dem Staplermotor gehören, derart programmiert sind, dass bei einem doppelten Niederdrücken der Geschwindigkeitssteuerung der Antrieb in der Grundbetriebsart, in welcher der gesamte Geschwindigkeitsbereich und die gebremsten Endpositionen der Deichsel zur Verfügung stehen, auf eine Betriebsart mit niedriger Geschwindigkeit mit gelöster Bremse und einem verfügbaren Betrieb mit einer sehr niedrigen maximalen Geschwindigkeit über den gesamten Bewegungsbereich der Deichsel derart umgeschaltet wird, dass der Stapler durch den Antriebsmotor auch dann bewegt werden kann, wenn die Deichsel vollständig nach oben geschwenkt ist.

7. Elektrisch betriebene Deichsel für einen Gabelstapler nach Anspruch 6, **dadurch gekennzeichnet, dass** der Stapler derart programmiert ist, dass die Betriebsart mit niedriger Geschwindigkeit bei einem wiederholten doppelten Niederdrücken der Geschwindigkeitssteuerung verlassen wird.

8. Elektrisch betriebene Deichsel für einen Gabelstapler nach Anspruch 6 oder 7, **dadurch gekennzeichnet, dass** sie derart programmiert ist, dass der Betrieb mit niedriger Geschwindigkeit bei einem Niederdrücken eines so genannten Körperschutzschalters am Deichselgriff verlassen wird.

9. Elektrisch betriebene Deichsel für einen Gabelstapler nach einem der Ansprüche 6 bis 8, **dadurch gekennzeichnet, dass** sie derart programmiert ist, dass die Betriebsart mit niedriger Geschwindigkeit **dadurch** verlassen wird, dass ein Signalschalter niedergedrückt wird, welcher bei der Betriebsart mit niedriger Geschwindigkeit diese Funktion ausführt und kein Signal abgibt.

10. Elektrisch betriebene Deichsel für einen Gabelstapler nach einem der Ansprüche 6 bis 9, **dadurch gekennzeichnet, dass** der Stapler derart programmiert ist, dass dann, wenn der Stapler im Gebrauchszustand in der Betriebsart mit niedriger Geschwindigkeit eine vorbestimmte, relativ kurze Zeitspanne inaktiv ist, automatisch zu der Grundbetriebsart zurückkehrt.

## Revendications

1. Procédé de commande d'un chariot à fourches électrique à conduite par timon, du type dans lequel le chariot a le frein en action ou en application lorsque le timon se trouve dans ses positions d'extrémité ou à proximité de celles-ci, afin de libérer le frein et de permettre une manoeuvre, **caractérisé en ce que** des moyens électroniques de commande qui sont intégrés dans le chariot, respectivement dans le moteur du chariot, sont programmés de telle sorte qu'une double pression sur la commande de vitesse fait passer l'entraînement d'un mode de fonctionnement normal, à savoir dans la totalité de la plage de vitesses et avec des positions d'extrémité freinées du timon, à un mode "vitesse lente" ayant un frein libéré et un entraînement disponible à une très basse vitesse maximale dans la totalité de la plage de déplacement du timon, de telle sorte que le chariot peut être également déplacé par le moteur électrique d'entraînement lorsque le timon est totalement relevé.

2. Procédé selon la revendication 1, **caractérisé en ce que** le chariot est programmé de manière à être dégagé du mode "vitesse lente" en renouvelant une double pression sur la commande de vitesse.

3. Procédé selon la revendication 1 ou 2, **caractérisé en ce qu'**on quitte le mode "vitesse lente" en appuyant sur un dénommé bouton en saillie situé sur la poignée de timon.

4. Procédé selon l'une des revendications précédentes, **caractérisé en ce qu'**on quitte le mode "vitesse lente" en poussant le bouton de signal qui, dans le mode "vitesse lente", est changé de manière à avoir cette fonction et non fournir un signal.

5. Procédé selon l'une quelconque des revendications précédentes, **caractérisé en ce que**, si le chariot, entraîné en mode "vitesse lente", est inactif pendant une période de temps prédéterminée relativement courte, il revient automatiquement sur le mode de fonctionnement normal.

6. Chariot à fourches électrique à conduite par timon, du type dans lequel le chariot a le frein en action ou en application lorsque le timon se trouve dans ses positions d'extrémité ou à proximité de celles-ci, **caractérisé en ce que** des moyens électroniques de commande qui sont intégrés au chariot, respectivement au moteur du chariot, sont programmés pour, lors d'une double pression effectuée sur la commande de vitesse, faire passer l'entraînement du mode de fonctionnement normal, à savoir dans la totalité de la plage de vitesses et avec des positions d'extrémité freinées du timon, à un mode "vitesse lente" ayant un frein libéré et un entraînement disponible à une très basse vitesse maximale dans la totalité de la plage de déplacement du timon, de telle sorte que le chariot peut également être déplacé par le moteur électrique d'entraînement lorsque le timon est totalement relevé.

7. Chariot à fourches électrique à conduite par timon selon la revendication 6, **caractérisé en ce que** le chariot est programmé de manière à être dégagé du mode "vitesse lente" en répétant une double pression sur la commande de vitesse.

8. Chariot à fourches électrique à conduite par timon selon la revendication 6 ou 7, **caractérisé en ce qu'**il est programmé pour être dégagé du mode "vitesse lente" en appuyant sur un dénommé bouton en saillie situé sur la poignée de timon.

9. Chariot à fourches électrique à conduite par timon selon l'une des revendications 6 à 8, **caractérisé en ce qu'**il est programmé pour être dégagé du mode "vitesse lente" en appuyant sur le bouton de signal qui, dans le mode "vitesse lente", est changé de manière à avoir cette fonction et non pour fournir un signal.

10. Chariot à fourches électrique à conduite par timon selon l'une quelconque des revendications 6 à 9, **caractérisé en ce que** le chariot est programmé de telle sorte que si le chariot utilisé en mode "vitesse lente" et qu'il est inactif pendant une période de temps prédéterminée relativement courte, il revient automatiquement sur le mode de fonctionnement normal.
